# EUROPÄISCHE PATENTSCHRIFT

(11) **EP 1 320 719 B1**
(45) Veröffentlichungstag und Bekanntmachung des Hinweises auf die Patenterteilung: **12.04.2006**
(21) Anmeldenummer: 01985748.1
(22) Anmeldetag: 27.09.2001
(51) Int. Cl.: G01B 5/00

(54) **KOORDINATENMESSGERÄT MIT VISKOSEDÄMPFER UND VERMINDERTEM EINFLUSS DER WÄRMEAUSDEHNUNG**
CO-ORDINATE MEASURING DEVICE COMPRISING VISCOUS DAMPER AND A REDUCED INFLUENCE OF THERMAL EXPANSION
APPAREIL DE MESURE DE COORDONNEES COMPORTANT UN AMORTISSEUR A MILIEU VISQUEUX, A INFLUENCE REDUITE DE LA DILATATION THERMIQUE

(30) Priorität: 27.09.2000 DE 10047953
(43) Veröffentlichungstag der Anmeldung: 25.06.2003
(60) Teilanmeldung: 04028612.2
(73) Patentinhaber: Carl Zeiss Industrielle Messtechnik GmbH, 73447 Oberkochen (DE)
(72) Erfinder: JACOBS, Klaus, 89551 Königsbronn-Ochsenberg (DE); WOLETZ, Franz, 73457 Essingen (DE)
(74) Vertreter: Schorr, Frank Jürgen
(86) Internationale Anmeldenummer: PCT/EP2001/011218
(87) Internationale Veröffentlichungsnummer: WO 2002/027265

(56) Entgegenhaltungen:
- EP-A- 0 126 888
- DD-A- 248 865
- DE-A- 19 821 274
- DE-U- 29 810 618
- US-A- 4 763 420
- US-A- 4 815 213
- US-A- 6 000 671

## Beschreibung

Die Erfindung betrifft ein Koordinatenmessgerät mit einem räumlich verfahrbaren Abtastkopf zum Abtasten eines auf einer Messauflage anordenbaren zu vermessenden Objekts.

Ein solches Koordinatenmessgerät dient zum Ausmessen von Oberflächenkoordinaten bzw. Konturen des zu vermessenden Objekts, wobei ein Tastende des Abtastkopfes in die Nähe von oder in Kontakt mit einer Vielzahl von Punkten auf der Oberfläche des Objekts gebracht wird und bei Kontakt mit bzw. Annäherung an diese Oberfläche die Auslenkung des Tastendes bezüglich einer Referenzposition, beispielsweise einen Nullpunkt der Messauflage, erfasst wird. Aus einer Vielzahl von solchen geeignet durchgeführten Messungen kann dann die Oberfläche des Objekts als Datensatz rekonstruiert werden.

Das Tastende kann zur Messung entweder in direkten Kontakt mit dem Objekt gebracht werden, wobei dieses Kontakt durch Auslenkung des Tastendes aus einer Ruhelage oder Betätigen eines mit dem Tastende gekoppelten Schalters registriert wird. Es kann die Messung aber auch berührungslos ausgeführt werden, wenn die Spitze des Tastkopfes an die Oberfläche des Objekts lediglich angenähert ist und das Tastende über eine berührungslos arbeitende Annäherungsregistrierung verfügt, beispielsweise mittels eines Laser- oder Ultraschallsensors.

Herkömmliche Koordinatenmessgeräte umfassen zur räumlichen Verfahrung des Abtastkopfes unter anderem einen Sockel zum Aufstellen auf einer Unterlage, ein bei Blickrichtung von oben beidseits der Messauflage und oberhalb der Messauflage angeordnetes Paar zueinander paralleler Führungsschienen, an denen in deren Längsrichtung verschiebbar ein Brückenträger gelagert ist. An dem Brückenträger wiederum ist der Tastkopf in Längsrichtung des Brückenträgers und in Vertikalrichtung zum Abtasten des Objekts verschiebbar gehaltert.

Der Messbereich des Koordinatenmessgeräts in Vertikalrichtung ist dabei mitbestimmt durch die Höhe, mit der die beiden Führungsschienen über der Messauflage angeordnet sind, so dass sich der Sockel von der Unterlage bis zu den Führungsschienen über eine Höhe erstreckt, die der Ausdehnung des Messbereichs in Vertikalrichtung in etwa entspricht. Temperatureinwirkungen auf diesen Sockel können zur Folge haben, dass die beiden Führungsschienen selbst auf unterschiedlichen Höhen angeordnet sind und damit die Messung verfälscht wird. Temperaturgradienten im Bereich des Sockels haben dabei eine Verkippung der Schienen aus der Horizontalen zur Folge, was die Messgenauigkeit ebenfalls beschränkt.

Maßnahmen zur Unterdrückung eines solchen Temperatureinflusses sind aus dem Dokument DE 198 21 274 A1 bekannt. Bei diesem bekannten Koordinatenmessgerät umfasst der Sockel ein Grundgerüst zum Aufstellen auf der Unterlage sowie vier sich vertikal nach oben erstreckende Stützstäbe, auf denen die Führungsschienen gelagert sind. Die Stützstäbe sind aus einem Material mit einem möglichst niedrigen Wärmeausdehnungskoeffizienten gefertigt, so dass Temperaturänderungen einen vergleichsweise geringen Einfluss auf die Höhe und horizontale Ausrichtung der Führungsschienen haben. Zudem umfasst der Sockel einen an dem Grundgerüst abgestützten Betonkörper mit Aussparungen, in denen die Stützstäbe angeordnet sind. Der Betonkörper isoliert die Stützstäbe thermisch gegenüber der Umgebung, so dass auch dadurch Temperatureinflüsse unterdrückt sind.

Zur Bestimmung der Verschiebungsposition des Brückenträgers an den Führungsschienen ist an einer der Führungsschienen ein Maßstab angebracht, welcher von einem von dem Brückenträger getragenen Abtastsensor abgelesen wird. Zur Bestimmung der Verschiebeposition des Tastkopfes in Längsrichtung des Brückenträgers ist an dem Brückenträger ferner ein Maßstab angebracht, welcher von einem weiteren Abtastsensor abgelesen wird, der an einem Schlitten gehaltert ist, welcher den Tastkopf in Vertikalrichtung verschiebbar trägt. Der Maßstab an der Führungsschiene bzw. dem Brückenträger ist aus einem Glas mit niedriger Wärmeausdehnung gefertigt, wobei die Führungsschiene bzw. der Brückenträger aus einem Material gefertigt ist, welches eine im Vergleich zu dem Glasmaßstab größere Wärmeausdehnung aufweist. Um Spannungen in dem Glasmaßstab bei Temperaturänderungen zu vermeiden, ist der Glasmaßstab im Bereich eines Längsendes desselben an der Führungsschiene bzw. zum Brückenträger festgelegt, während die übrigen Bereiche des Maßstabs in Längsrichtung desselben verschiebbar an der Führungsschiene bzw. dem Brückenträger gelagert sind.

Trotz dieser vorangehend beschriebenen Maßnahmen hat es sich als wünschenswert herausgestellt, die Messgenauigkeit des herkömmlichen Koordinatenmessgeräts weiter zu erhöhen.

Demgemäß ist es eine Aufgabe der vorliegenden Erfindung, ein Koordinatenmessgerät mit einer erhöhten Messgenauigkeit bereitzustellen.

Ein erfindungsgemässes Koordinatenmessgerät ist im Patentanspruch 1 spezifiziert.

Unter anderen umfasst das Koordinatenmessgerät einen Sockel zum Aufstellen auf einer Unterlage, welche horizontal ausgerichtet ist. An dem Koordinatenmessgerät ist ferner ein Bereich zur Anordnung des zu vermessenden Objekts vorgesehen, welcher im Folgenden als Messauflage bezeichnet wird. Die Messauflage kann Teil des Koordinatenmessgeräts sein und beispielsweise einen Messtisch umfassen, der auf dem Sockel angeordnet ist. Andererseits kann die Messauflage aber auch von dem Koordinatenmessgerät verschieden sein, beispielsweise wenn das zu vermessende Objekt unmittelbar auf der Unterlage angeordnet wird.

Das Koordinatenmessgerät umfasst ferner ein Paar zueinander paralleler Führungsschienen, welche bei Blickrichtung von oben beidseits der Messauflage angeordnet sind und welche bei horizontaler Blickrichtung oberhalb der Messauflage angeordnet sind. Ein Brückenträger erstreckt sich quer zwischen den Führungsschienen und ist in deren Längsrichtung verschiebbar an diesen gelagert. An dem Brückenträger ist der Tastkopf in Vertikalrichtung und in Längsrichtung des Brückenträgers verschiebbar gehaltert. Ferner sind die Führungsschienen über sich vertikal erstreckende Stützstäbe auf dem Sockel in Vertikalrichtung abgestützt und in Horizontalrichtung elastisch an dem Sockel in einer Ruheposition gehalten.

Der Erfindung liegt ein Gedanke zugrunde, der auf folgender Überlegung zu der im Hinblick auf die Minderung von Temperatureinflüssen ausgelegten Anordnung mit vertikaler Abstützung der Führungsschienen über Stützstäbe auf dem Sockel und elastischer Festlegung in einer Horizontalrichtung an dem Sockel beruht: Es treten bei dieser Anordnung Schwingungen der Führungsschienen in Horizontalrichtung relativ zu dem Sockel auf, so dass diese Horizontalschwingungen die Messgenauigkeit beschränken und die erwünschte Erhöhung der Messgenauigkeit durch den Ausschluss von Temperatureinflüssen deshalb nicht im erwarteten Umfang erreicht wird.

Um die Erhöhung der Messgenauigkeit durch Minderung der Temperatureinflüsse zu erreichen, schlägt die Erfindung deshalb vor, wenigstens einen Viskosedämpfer vorzusehen, der zwei Komponenten umfasst, zwischen denen ein viskoses Medium zur Dämpfung einer Relativbewegung der beiden Komponenten zueinander vorgesehen ist, wobei eine der Komponenten des Viskosedämpfers mit dem Sockel gekoppelt ist und die andere Komponente des Viskosedämpfers derart mit der Führungsschiene gekoppelt ist, dass sie sich gemeinsam mit dieser bewegt. Durch diese Maßnahme werden die Messgenauigkeit begrenzende Schwingungen der Führungsschiene relativ zu dem Sockel gedämpft, so dass die Maßnahmen zur Minderung von Temperatureinflüssen schließlich zu einer Verbesserung der Messgenauigkeit führen. Die Viskosedämpfung ist dabei deshalb vorteilhaft, weil sie einerseits langsam stattfindenden Änderungen der Relativposition zwischen Führungsschiene und Sockel auf Grund von Temperaturänderungen ohne Erzeugung von etwa mechanischen Spannungen nachgibt und andererseits Bewegungen, wie etwa Schwingungsbewegungen, dämpft. Dies führt zu einer ruhigeren Aufhängung des Abtastkopfs an dem Koordinatenmessgerät und damit zu einer erhöhten Messgenauigkeit.

Vorteilhafterweise ist wenigstens einer der Stützstäbe verschwenkbar an dem Sockel abgestützt, und zwar derart, dass er in einer zur Erstreckungsrichtung der Führungsschiene parallelen Ebene verschwenkbar ist. Alternativ oder ergänzend hierzu ist es ebenfalls vorteilhaft, dass der Stützstab in dieser Ebene verschwenkbar an der Führungsschiene angelenkt ist. Durch diese Maßnahmen kann sich die Führungsschiene relativ zu dem Sockel bedingt durch thermische Einflüsse ausdehnen, ohne dass übermäßige mechanische Spannungen in der die Führungsschiene stützenden Struktur auftreten.

Bevorzugterweise ist einer der Stützstäbe Teil des Viskosedämpfers, so dass Schwingungen in dem Stützstab selbst integral gedämpft werden.

Im Hinblick auf eine einfache Anordnung der Komponenten ist es günstig, wenn ein oberer Bereich des Sockels die andere Komponente des Viskosedämpfers bereitstellt.

Um die Führungsschiene in Horizontalrichtung elastisch an dem Sockel zu haltern, ist vorzugsweise eine Federanordnung vorgesehen, deren eine Seite an dem oberen Bereich des Sockels festgelegt ist. Die andere Seite der Feder ist dann direkt oder indirekt mit der Führungsschiene gekoppelt, wobei eine Kopplung mit einem oberen Bereich des Stützstabes bevorzugt ist, der dann wiederum an der Führungsschiene festgelegt ist.

Vorzugsweise koppelt die Federanordnung die Führungsschiene derart an den Sockel, dass elatische Auslenkungen in Erstreckungsrichtung der Führungsschiene möglich sind, wobei die Führungsschiene quer zur Erstreckungsrichtung derselben im Wesentlichen starr an den oberen Bereich des Sockels gekoppelt ist. Alternativ hierzu ist es ebenfalls bevorzugt, dass die Federanordnung die Führungsschiene in beide Horizontalrichtungen elastisch auslenkbar an den oberen Teil des Sockels koppelt, wobei, weiter bevorzugt, in Richtung der Erstreckungsrichtung der Führungsschiene eine weichere Federwirkung bereitgestellt ist als quer zur Erstreckungsrichtung der Führungsschiene.

In einer weiteren Ausführung ist bei dem Koordinatenmessgerät an einer der Führungsschienen oder/und dem Brückenträger ein Maßstab festgelegt, dessen Wärmeausdehnungskoeffizient von dem Wärmeausdehnungskoeffizienten der Führungsschiene bzw. des Brückenträgers verschieden ist.

Hierbei liegt die Erkenntnis zugrunde, dass die Verschiebung eines nicht an der Führungsschiene bzw. dem Brückenträger festgelegten Bereichs des Maßstabs auf Grund thermischer Einflüsse zu einer Erhöhung des Messfehlers beiträgt.

Es wird diesbezüglich vorgeschlagen, dass ein in Maßstab-Längsrichtung zentraler Bereich des Maßstabs an der Führungsschiene bzw. dem Brückenträger festgelegt ist und beidseits von diesem festgelegten Bereich entfernte Bereiche des Maßstabs relativ zu der Führungsschiene bzw. dem Brückenträger in Maßstablängsrichtung verschiebbar sind.

Hierdurch wird im Vergleich zu einem Maßstab, der mit seinem Längsende an der Führungsschiene bzw. dem Brückenträger festgelegt ist, ein durch Wärmeausdehnung verursachter Messfehler in etwa halbiert. Besonders vorteilhaft ist es hierbei, wenn der an der Führungsschiene festgelegte Bereich des Maßstabs bei Blick in Richtung des Brückenträgers in etwa über einem Zentrum der Messauflage angeordnet ist. Dies ergibt eine weitgehend symmetrische Anordnung und über im Wesentlichen den gesamten Messbereich einen vergleichsweise geringen Messfehler. Zu eben diesem Zweck ist vorteilhafterweise der an dem Brückenträger festgelegte Bereich des Maßstabs bei Blick in Längsrichtung der Führungsschiene in etwa über dem Zentrum der Messauflage angeordnet.

Einen besonderen Vorteil entwickelt die zentrale Festlegung der Maßstäbe dann, wenn das Koordinatenmessgerät einen Drehtisch aufweist. Ein solcher Drehtisch erlaubt eine Verdrehung des auf dem Drehtisch angeordneten zu vermessenden Objekts bezüglich des Abtastkopfes um eine sich im wesentlichen vertikal erstreckende Drehachse. Es ist dann der zentrale Bereich des Maßstabs, der an der Führungsschiene bzw. dem Brückenträger festgelegt ist, bezüglich des Drehzentrums des Drehtisches ausgerichtet, und zwar in Blickrichtung senkrecht zur Erstreckungsrichtung des Maßstabs. Insbesondere fluchtet in dieser Blickrichtung die Mitte des festgelegten Bereichs des Maßstabs mit der Drehachse des Drehtischs. Es befindet sich dann die Drehachse des Drehtischs weitgehend unbeeinflußt von Temperaturänderungen immer an derselben Stelle in dem Mess-Koordinatensystem des Koordinatenmessgeräts.

Vorteilhafterweise ist die Mitte des an der Führungsschiene angebrachten Maßstabes ferner mittig zwischen den beiden die Führungsschienen stützenden Stützstäben angeordnet, und die Mitte des an dem Brückenträger angebrachten Maßstabes ist bevorzugterweise mittig zwischen den Führungsschienen angebracht.

Der an der Führungsschiene bzw. dem Brückenträger in Maßstablängsrichtung festgelegte Bereich des Maßstabs ist quer hierzu vorzugsweise verlagerbar, um eine möglichst spannungsfreie Halterung des Maßstabs zu erzielen. Eine solche Halterung wird vorzugsweise mit einem Rollenlager realisiert. Ferner ist es bevorzugt, dass der Maßstab in seinen von dem festgelegten Bereich entfernten Bereichen quer zur Maßstablängsrichtung bezüglich der Führungsschiene bzw. dem Brückenträger festgelegt ist, um ebenfalls eine möglichst spannungsfreie Halterung des Maßstabs zu erreichen. Zu eben diesem Zweck ist der Maßstab in diesen entfernten Bereichen allerdings auch vorzugsweise wiederum in Maßstablängsrichtung verlagerbar gehalten, wozu, weiter bevorzugt, ebenfalls ein Rollenlager vorgesehen ist.

Die vorangehend geschilderten Rollenlager umfassen vorzugsweise eine maßstabsseitige Rollfläche und eine führungsschienenseitige bzw. brückenträgerseitige Rollfläche, wobei zwischen den beiden Rollflächen wenigstens eine und vorzugsweise eine Mehrzahl Kugeln angeordnet ist.

Hierbei ist es bevorzugt, dass die beiden Rollflächen durch Magnetkraft gegen die Kugeln gedrückt werden, wozu vorzugsweise eine der beiden Rollflächen durch einen Permanentmagneten gebildet ist und die andere Rollfäche durch ein magnetisches Material, beispielsweise Eisen, gebildet ist.

Im Folgenden werden Ausführungsbeispiele der Erfindung anhand von Zeichnungen näher erläutert. Hierbei zeigt:
- Figur 1: ein erfindungsgemäßes Koordinatenmessgerät,
- Figur 2: einen Teil des in Figur 1 gezeigten Koordinatenmessgeräts mit einem abgenommenen Sockelteil,
- Figur 3: eine Detailansicht der Figur 2 im Schnitt,
- Figur 4: einen schematischen Schnitt durch das Koordinatenmessgerät der Figur 1,
- Figur 5: einen Flansch zur Kopplung einer Stützstange an eine Führungsschiene des Koordinatenmessgeräts der Figur 1,
- Figur 6: eine Federanordnung zur elastischen Kopplung eines Stützstabes an ein Sockelteil des Koordinatenmessgeräts der Figuren 1 und 2 und
- Figur 7: eine schematische Darstellung zur Halterung eines Maßstabs an einer Führungsschiene des Koordinatenmessgeräts der Figur 1.

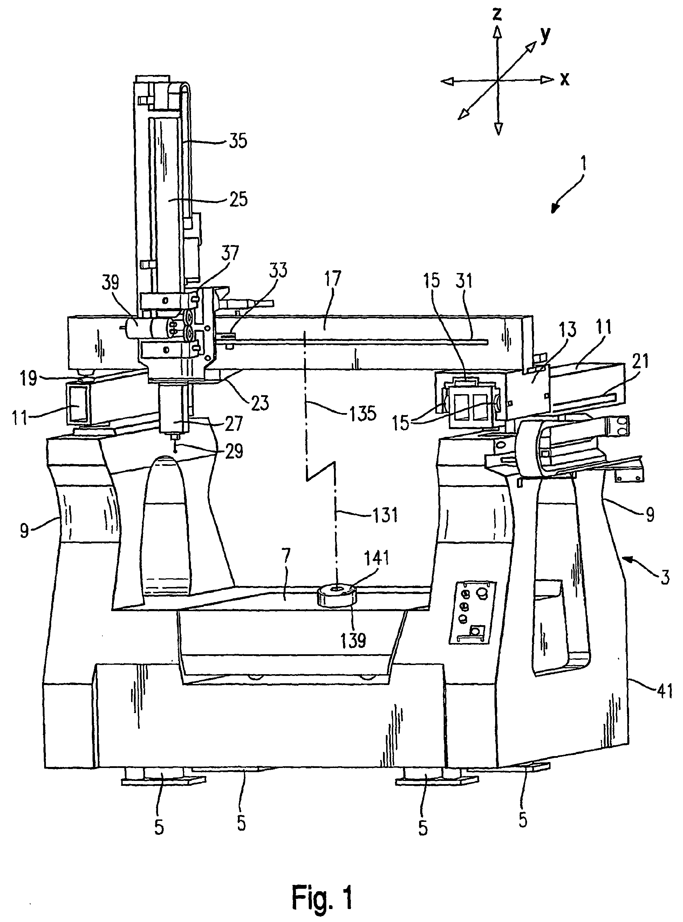

Ein in Figur 1 gezeigtes Koordinatenmessgerät 1 entspricht in seinem Grundaufbau dem in Dokument DE 198 21 274 A1 offenbarten Koordinatenmessgerät, wobei die Offenbarung dieses Dokument durch Inbezugnahme in ihrem vollen Umfang in die hier beschriebene Ausführungsform aufgenommen wird, und umfasst einen Sockel 3 mit Füßen 5 zum Aufstellen des Koordinatenmessgeräts 1 auf einem Boden. Wie aus Figur 1 ersichtlich ist, weist der Sockel 3 eine U-förmige Struktur auf, wobei in einem mittleren Bereich ein Messtisch 7 angeordnet ist, um darauf ein zu vermessendes Objekt zu platzieren. Der Messtisch 7 beinhaltet einen Drehtisch 139, auf dessen Oberfläche 141 das zu vermessende Objekt zur Anordnung kommen kann. Der Drehtisch 139 dient dazu, das auf ihm angeordnete Objekt relativ zu dem übrigen Koordinatenmessgerät um eine sich vertikal erstreckende Drehachse 131 zu verdrehen. Die Drehachse 131 ist bezüglich der Messauflage 7 in etwa zentriert, allerdings kann die Drehachse auch neben dem Zentrum der Messauflage, das heißt außerhalb der Mitte der U-förmigen Struktur des Sockels, angeordnet sein.

Beidseits des Messtischs 7 erstreckt sich jeweils eine Seitenwange 9 des Sockels 3 nach oben, wobei oben auf jeder Wange 9 jeweils eine Führungsschiene 11 aus einem Keramikmaterial angebracht ist. Die Führungsschienen 11 sind horizontal und parallel zueinander ausgerichtet und erstrecken sich in einer in Figur 1 mit y bezeichneten Richtung.

Über der in Figur 1 rechten Führungsschiene 11 greift von oben ein in Längsrichtung der Führungsschiene 11 verschiebbarer Führungsschlitten 13, welcher über Luftkissen 15 an der Führungsschiene 11 geführt ist. An dem Führungsschlitten 13 ist ein Brückenträger 17 befestigt, der sich in eine zur Erstreckungsrichtung der Führungsschiene 11. orthogonale Richtung quer bis über die in Figur 1 linke Führungsschiene 11 hin erstreckt, auf welcher er sich mittels eines Luftkissens 19 abstützt. Der Brückenträger 17 ist somit in Längsrichtung der Führungsschienen 11 leichtgängig und präzise verschiebbar, wobei seine Position in Längsrichtung der Führungsschienen 11 über einen an der in Figur 1 rechten Führungsschiene 11 angeordneten Maßstab 21 und einen an dem Führungsschlitten 13 angebrachten und in Figur 1 nicht sichtbaren optischen Abtastkopf erfasst wird. An dem Brückenträger 17 ist ein weiterer Führungsschlitten 23 in Längsrichtung des Brückenträgers und einer in Figur 1 mit x bezeichneten Richtung leichtgängig verschiebbar gelagert. An dem Schlitten 23 wiederum ist eine sich in vertikaler Richtung (Richtung des mit z bezeichneten Pfeils in Figur 1) erstreckende Führung bzw. Pinole 25 verschiebbar gehalten, an dessen unterem Ende ein Tastkopf 27 befestigt ist, der ein Tastende 29 zur Annäherung an das zu vermessende Objekt trägt.

Die Position des Tastendes 29 in x-Richtung wird über einen an dem Brückenträger 17 angebrachten Maßstab 31 und einen an dem Führungsschlitten 23 angebrachten und den Maßstab 31 ablesenden optischen Abtastkopf 33 erfasst, während die Position des Tastendes 29 in Z-Richtung über einen an der Pinole 25 angebrachten Maßstab 35 und einen zugehörigen an dem Führungsschlitten 23 angebrachten optischen Abtastkopf 37 erfasst wird.

Für die Verschiebung des Brückenträgers 17 entlang der Führungsschienen 11 in y-Richtung, die Verschiebung der Pinole 25 entlang dem Brückenträger 17 in X-Richtung und der Pinole 25 bezüglich dem Brückenträger in Z-Richtung ist jeweils ein motorisierter Antrieb vorgesehen, wobei in Figur 1 lediglich ein Reibradantrieb 39 für die Verschiebung der Pinole 25 in Z-Richtung sichtbar ist.

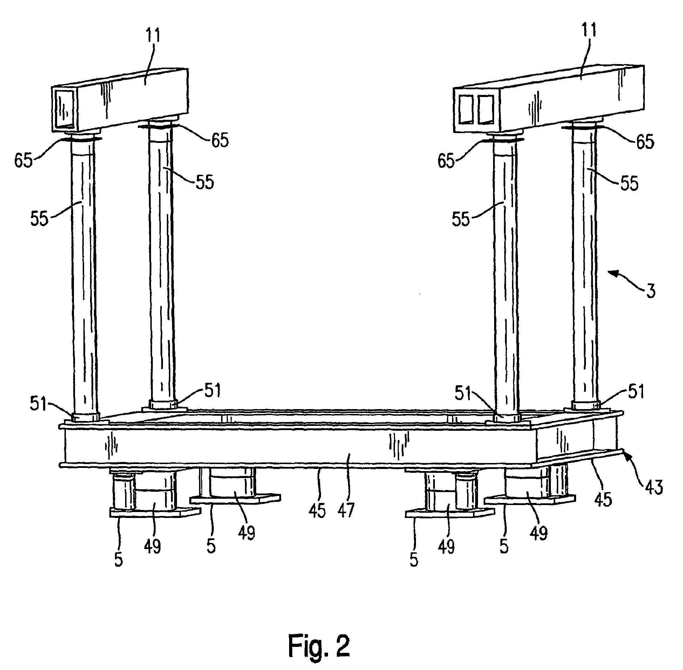

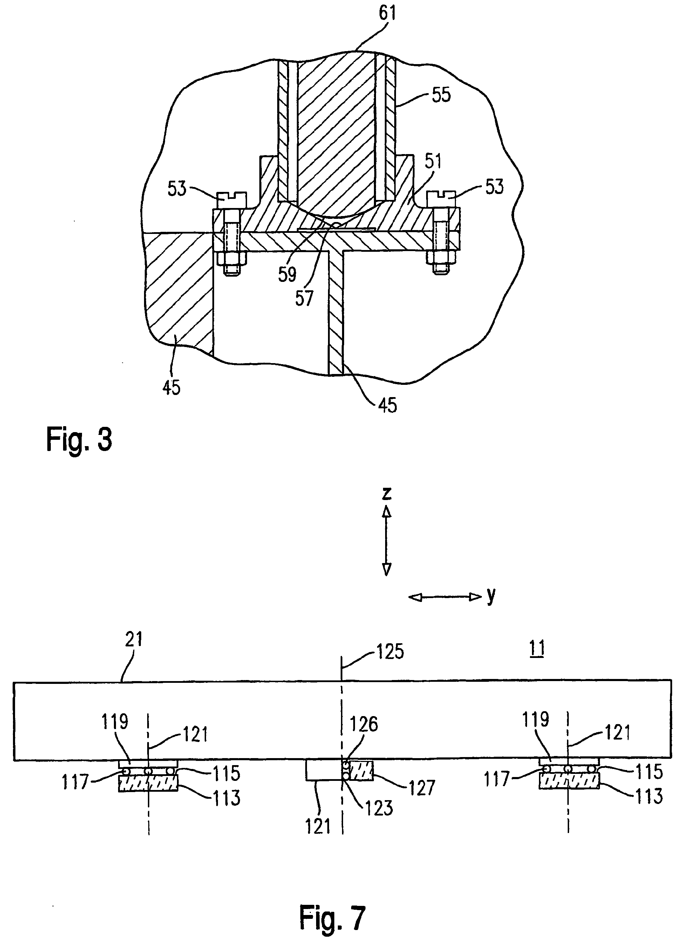

Die in Figur 1 von außen sichtbare Hülle des Sockels 3 ist durch einen Polymerbetonkörper 41 gebildet, der um einen aus Figur 2 ersichtlichen Kern 43 des Sockels 3 herum angebracht ist. Der Kern 43 des Sockels 3 umfasst einen aus mehreren Doppel-T-Trägern 45 gebildeten Basisrahmen 47, an dem die Füße 5 über Schwingungsdämpfer 49 angebracht sind. In einer jeden Ecke des Basisrahmens 45 ist auf dessen Oberseite jeweils ein Flansch 51 angebracht, der in Figur 3 im Detail dargestellt ist. Der Flansch 51 ist an den Doppel-T-Trägern 45 mittels Schrauben 53 befestigt. In den Flansch 51 ist von oben ein Rohr 55 eingesteckt und fest an dem Flansch 51 gehalten.

Der aus dem Basisrahmen 47, den Flanschen 51 und den Rohren 55 bestehende Kern 43 des Sockels 3 ist von dem Polymerbeton des Polymerbetonkörpers 41 umgossen, wobei sich die Rohre 55 somit innerhalb des Polymerbetonkörpers 41 erstrecken und wobei obere Enden 63 der Rohre 55 und eine obere Fläche 89 des Polymerbetonkörpers oben miteinander bündig abschließen.

Im Zentrum des Flansches 51 ist eine sich nach oben konisch erweiternde Lagerfläche 57 für ein unteres balliges Ende 59 einer Stützstange 61 ausgebildet. Die Stützstange 61 erstreckt sich in Z-Richtung über das Ende 63 des Rohres 55 hinaus, und an einem oberen Ende der Stützstange 61 ist ein Flansch 65 angeschraubt, der als Auflager für die Führungsschiene 11 dient.

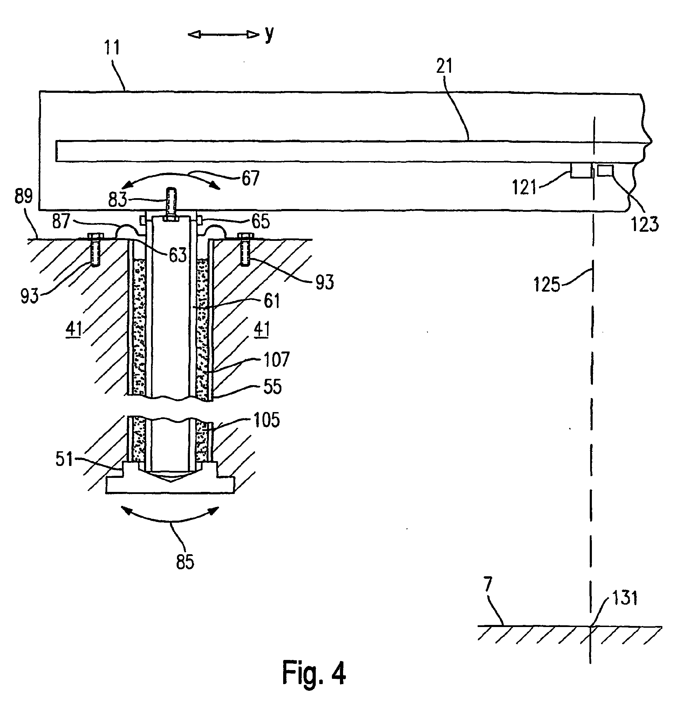

Das ballige Ende 59 des Stützstabes 61 legt diesen über die konische Fläche 57 an dem Basisrahmen 47 des Sockels 3 in Y-Richtung fest, wobei das ballige Ende 59 zusammen mit der konischen Fläche 57 allerdings ein Schwenklager für den Stützstab 61 bildet, so dass dieser in einer in Figur 4 mit einem Pfeil 67 bezeichneten Richtung um den Flansch 51 in einer Y-Z-Ebene aus der Vertikalen auslenkbar ist.

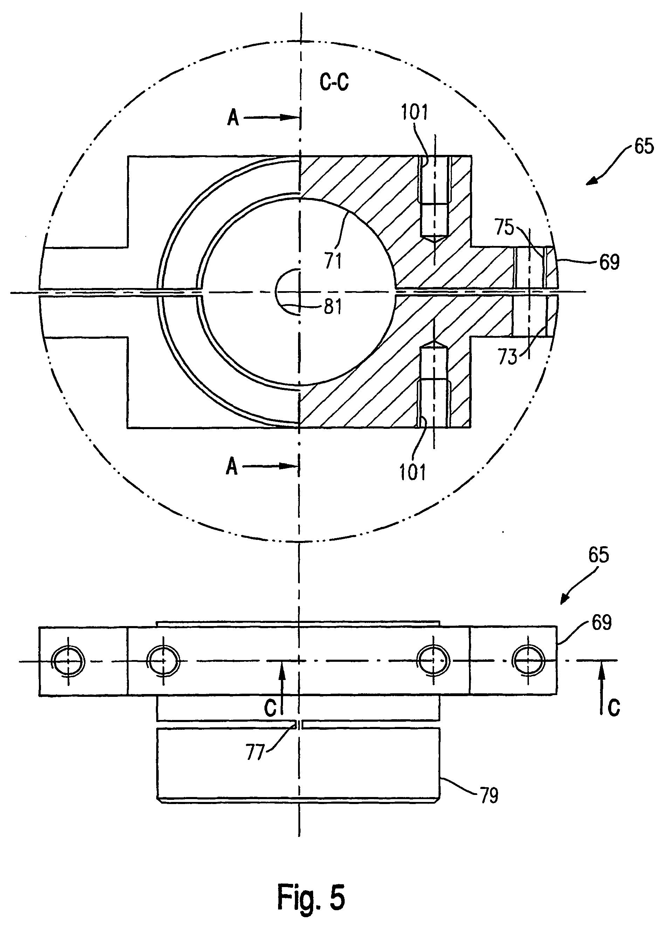

Der obere Flansch 65 ist in Figur 5 im Detail dargestellt und umfasst ein Spannteil 69 mit einer kreisförmigen Anlagefläche 71 zur Anlage an einen Außenmantel des Stützstabes 61 an dessen oberen Ende, wobei mittels zweier in Bohrungen 73 und Gewindebohrungen 75 eingeschraubte Schrauben (in Figur 5 nicht dargestellt) das Spannteil 69 an dem oberen Ende des Stützstabes 61 festgespannt ist. Das Spannteil 69 ist über zwei dünne Stege 77 mit einem Auflageteil 79 des Flansches 65 für die Führungsschiene 11 verbunden, wobei an dem Auflageteil 79 eine Bohrung 81 für eine Schraube 83 zur Verbindung mit der Führungsschiene 11 vorgesehen ist. Die beiden dünnen Stege 77 sind an gegenüberliegenden Seiten des Flansches 65 angeordnet, so dass eine Verbindungslinie zwischen den beiden Stegen 77 sich in X-Richtung erstreckt. Die beiden Stege 77 bilden jeweils eine elastische Verbindung zwischen dem Auflageteil 79 und dem Klemmteil 69 des Flansches 65, so dass durch die beiden Stege 77 zusammen der Stützstab 61 gelenkig an die Führungsschiene 11 gekoppelt ist, wobei eine Auslenkung des Stabs 61 um den oberen Flansch 65 in einer in Figur 4 mit einem Pfeil 85 angezeigten Richtung in der Y-Z-Ebene aus der Vertikalen heraus erfolgen kann.

Indem ein jeder Stützstab 61 um den unteren Flansch 51 in der Richtung 67 auslenkbar ist und um den oberen Flansch 65 in der Richtung 85 auslenkbar ist, kann die über zwei Stützstäbe 61 abgestützte Führungsschiene 11 bezüglich dem Sockel 3 in Y-Richtung parallel verschoben werden, und sie kann um die in Figur 4 dargestellte Ruhestellung mit vertikaler Orientierung der Stützstäbe 61 ausgelenkt werden. Ferner kann sich die Führungsschiene 11 bezüglich dem Sockel 3 thermisch ausdehnen, wobei die oberen Enden der beiden Stützstäbe 61 voneinander weggespreizt werden.

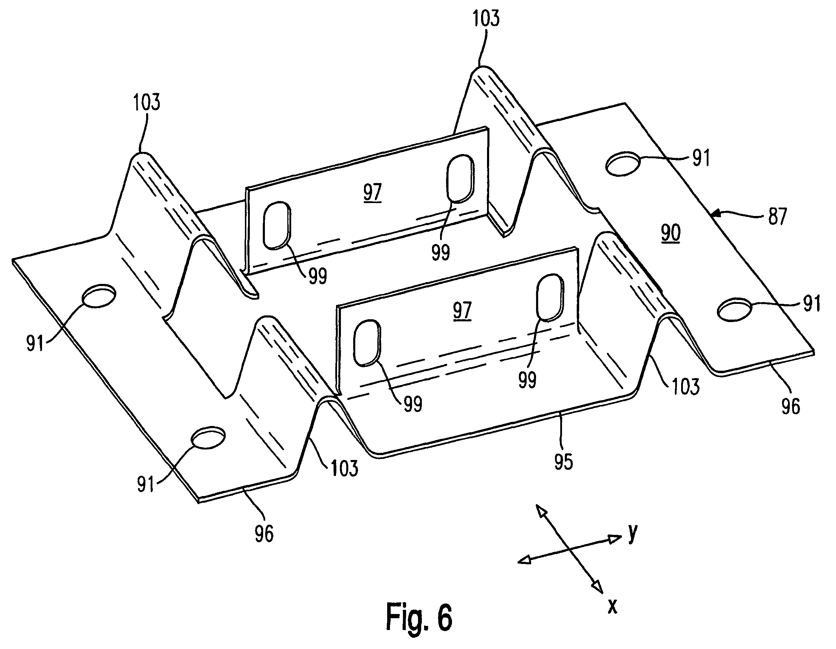

In Figur 6 ist eine Federanordnung 87 im Detail dargestellt, durch die das obere Ende jedes Stützstabs 61 an die mit dem oberen Ende 63 des Rohrs 61 bündige obere Fläche 89 des Betonkörpers 41 gekoppelt ist. Die Federanordnung 87 ist aus einem rechteckförmigen Blech herausgestanzt und in der in Figur 6 dargestellten Weise gebogen. Das Blech 90 weist zwei Seitenbereiche 96 mit jeweils zwei Löchern 91 zur Befestigung der Federanordnung 87 an dem Betonkörper 61 mittels Schrauben 93 auf.

Ein zentraler Bereich 95 des Blechs 90 weist zwei nach oben gebogene Wangen 97 zur Befestigung an dem oberen Flansch 65 auf. Hierzu sind in einer jeden Wange 97 zwei Langlöcher 99 für Schrauben vorgesehen, die in Sacklöcher 101 an dem Spannteil 69 des oberen Flansches 65 eingeschraubt werden. Über die an dem zentralen Bereich 95 hochgebogenen Wangen 97 des Blechs 90 koppelt die Federanordnung 87 die Führungsschiene 11 in X-Richtung an dem Betonkörper 41 des Sockels 3, wobei die Federanordnung 87 für diese Kopplung in X-Richtung eine relativ harte Federkonstante bereitstellt. Die Federkonstante für die Kopplung in Y-Richtung ist im Vergleich hierzu wesentlich geringer, da der mittlere Bereich 95 zur Befestigung des Flansches 65 beidseits über aufgebogene Wölbungen 103 des Blechs 90 an dessen Seitenbereiche 96 gekoppelt ist, in welchen die Löcher 91 zur Verbindung mit dem Betonkörper 41 vorgesehen sind. Dadurch ist der Stützstab 61 in der Richtung 67 mit einer wesentlich geringeren Federkraft aus der Vertikalen auslenkbar als in einer zu der Richtung 67 senkrechten Schwenkrichtung um den unteren Flansch 51.

In dem Betonkörper 41 ist ein Hohlraum 105 flüssigkeitsdicht ausgebildet, welcher gegenüber dem Betonkörper 41 nach unten durch den unteren Flansch 51 und nach den Seiten durch das Rohr 55 begrenzt und nach oben offen ist. In diesem Hohlraum 105 steht der Stützstab 61 mit Abstand von dem Rohr 55, wobei der Zwischenraum zwischen Rohr 55 und Stützstab 61 mit einer viskosen Flüssigkeit 107 gefüllt ist. In dem bevorzugten Ausführungsbeispiel beträgt die Viskosität der Flüssigkeit etwa 20.000 mm/sec², und die Flüssigkeit kann durch ein geeignetes Öl oder eine synthetische Flüssigkeit mit der entsprechenden Viskosität gebildet sein. Diese Anordnung wirkt als Viskositätsdämpfer zwischen Führungsschiene 11 und Sockel 3, wobei die Stützstange 61 eine mit der Führungsschiene 11 gekoppelte erste Komponente des Viskositätsdämpfers bildet und das in dem Betonkörper 41 eingebettete Rohr 55 als mit dem Sockel 3 verbundene zweite Komponente des Viskositätsdämpfers wirkt. Durch die Bereitstellung dieses Viskositätsdämpfers zwischen Führungsschiene 11 und Sockel 3 werden Schwingungen der Führungsschiene 11 relativ zu dem Sockel und insbesondere Schwingungen in Richtung des Pfeils 67 in Figur 4 wirksam unterdrückt, so dass hierdurch die Messgenauigkeit des Koordinatenmessgeräts 1 deutlich erhöht wird.

In Figur 7 ist die Anbringung des Maßstabs 21 an der Führungsschiene 11 im Detail dargestellt. Der Maßstab 21 besteht aus Zerodur, einem Glasmaterial mit einem Wärmeausdehnungskoeffizienten von nahezu Null. Die aus Keramikmaterial gefertigte Führungsschiene 11 hat hingegen einen Wärmeausdehnungskoeffizienten, der größer ist als der des Glasmaßstabs 21. An der Führungsschiene 11 sind zwei Magnete 113 festgelegt, welche eine horizontal orientierte polierte Fläche 115 aufweisen. Auf jeder Fläche 115 liegen drei Kugeln 117, auf welchen wiederum eine Eisenplatte 119 mit einer polierten horizontalen Fläche aufliegt. Die Eisenplatten 119 sind an dem Maßstab 21 befestigt, und zwar zentriert um dessen Bessel-Punkte 121. Gegen die Wirkung der Schwerkraft ist der Maßstab 21 somit an seinen Bessel-Punkten 121 abgestützt, so dass sich auf Grund der Schwerkraftwirkung eine minimale Durchbiegung des Maßstabs 21 ergibt. Durch die Magnete 113 und die von diesen angezogenen Eisenplatten 119 ist der Maßstab 21 somit in Z-Richtung an der Führungsschiene 11 festgelegt, jedoch in Y-Richtung verlagerbar bezüglich der Führungsschiene 11 gestützt.

In einem zentralen Bereich des Maßstabs 21 ist an diesem eine weitere Eisenplatte 123 derart angeklebt, dass eine von deren sich vertikal erstreckenden Seitenflächen 123 in einer Symmetrieebene 125 des Maßstabs 21 angeordnet ist, welche sich in Z-X-Richtung erstreckt. Auf der Fläche 123 liegen zwei Kugeln 126 mit ihrer einen Seite an, während an ihrer anderen Seite ein an der Führungsschiene 11 befestigter Magnet 127 anliegt und durch seine Magnetwirkung gegen die an dem Maßstab 21 befestigte Eisenplatte 121 gezogen wird.

Die Symmetrieebene 125 des Maßstabes 21 ist weiterhin auch symmetrisch zu den die Führungsschiene 11 stützenden Stützstäben 61 angeordnet, also z. B. mittig zwischen den oberen Flanschen 65 bzw. Schrauben 83.

Die Symmetrieebene 125, das heißt der Bereich, an dem der Maßstab 21 an der Führungsschiene L festgelegt ist, ist insbesondere auch eine Symmetrieebene hinsichtlich der termischen Ausdehnung des Maßstabes 21 relativ zur Führungsschiene 11. Dies bedeutet, dass termische Ausdehnungen des Maßstabes symmetrisch zur Symmetrieebene 125 erfolgen, selbst wenn die Längen des Maßstabes ausgehend von der Symmetrieebene 125 zu seinen beiden Enden hin geometrisch voneinander verschieden sind. Die Symmetrieebene des Maßstabes ist dabei zum übrigen Koordinatenmessgerät derart ausgerichtet, dass die Drehachse 131 des Drehtischs 139 darin enthalten ist. Damit ist das Zentrum des Drehtischs in y-Richtung des Koordinatensystems des Koordinatenmessgeräts weitgehend unabhängig von Temperaturänderungen immer an der selben Stelle angeordnet.

An der Fläche der Führungsschiene 11 (in X-Richtung) ist der Maßstab 21 aufgesprengt, d.h. es ist zwischen der Oberfläche der Führungsschiene 11 und der dieser zuweisenden Oberfläche des Maßstabs 21 eine Ölschicht eingebracht, welche eine Adhäsionskraft bereitstellt, so dass der Maßstab 21 sich nicht von der Führungsschiene 11 löst.

Durch diese Anordnung ist der Maßstab 21 mit seiner Mitte an der Führungsschiene 11 in seiner Längsrichtung (Y-Richtung) festgelegt, allerdings in Z-Richtung verlagerbar.

Hierbei ist der Magnet 127 an der Führungsschiene 11 so angeordnet, dass die Symmetrieebene 125 des Maßstabs 21 gesehen in X-Richtung senkrecht über einem Zentrum des Messtischs 7 bzw. der Drehachse 131 des Drehtischs 139 angeordnet ist (vgl. Figur 4).

Es ist somit der Maßstab 21 in seiner Mitte 125 an der Führungsschiene 11 festgelegt, und eine zwischen dem Maßstab 21 und der Führungsschiene 11 unterschiedliche Wärmeausdehnung kann durch Bewegung der Rollen 117 im Bereich der Auflage des Maßstabs 21 an seinen Bessel-Punkten 121 ausgeglichen werden. Da zudem die Mitte 125 des Maßstabs 21 über dem Zentrum 131 des Messbereichs 7 angeordnet ist, ergeben sich auf Grund von Wärmeausdehnungen besonders geringe Messfehler beim Ablesen der Position des Führungsschlittens 13 auf der Führungsschiene 11.

Der Maßstab 31 ist an dem Brückenträger 17 in einer Weise angebracht, die der Anbringung des Maßstabes 21 an der Führungsschiene 11 analog ist. Die Anbringung des Maßstabes 31 an den Brückenträger 17 erfolgt dabei ebenso, wie dies in Figur 7 für den Maßstab 21 an der Führungsschiene 11 dargestellt ist, so dass sich eine eigene Darstellung der Anbringung des Maßstabs 31 an dem Brückenträger 17 erübrigt. Es bleibt allerdings zu ergänzen, dass auch der Maßstab 31 eine Symmetrieebene 135 aufweist, welche bei Blick in Y-Richtung senkrecht über dem Zentrum des Messtischs 7 bzw. der Drehachse 131 des Drehtischs 139 angeordnet ist, so dass auch bei der Bestimmung der Position des Tastendes 29 in X-Richtung das Ablesen des Maßstabs 31 auch bei unterschiedlichen Temperaturen zu besonders geringen Messfehlern führt.

Ferner ist die Mitte des Maßstabes 31 auch zentral zwischen den beiden Führungsschienen 11 angeordnet, so dass auch der Maßstab 31 selbst bezüglich der Führungsschienen 11 symmetrisch angeordnet ist.

Das vorangehend beschriebene Ausführungsbeispiel der Erfindung ist besonders vorteilhaft dahingehend, dass die Stützstäbe 61, welche ja die Funktion haben, die Führungsschiene 11 an dem Sockel 3 vertikal abzustützen, gleichzeitig auch als Komponenten des Viskosedämpfers genutzt werden. Es ist andererseits auch denkbar, von den Stützstäben 61 unabhängige Viskosedämpfer zwischen Führungsschiene 11 und Sockel 3 vorzusehen. In einem solchen Fall muss kein flüssigkeitsdichter Raum in dem Sockel vorgesehen werden, was insbesondere dann, wenn die Wangen 9 des Sockels 3 als Mineralgusskörper 41 gefertigt sind, die Herstellung vereinfacht.

Ferner ist auch vorgesehen, die zentrale Festlegung eines Maßstabs insbesondere über einem Zentrum des Messbereichs bzw. einer Drehachse eines Drehtischs, auch an einem Koordinatenmessgerät einzusetzen, welches von dem der vorangehend beschriebenen Ausführungsform abweicht. Insbesondere ist dies ein Koordinatenmessgerät, dessen beide Führungsschienen nicht über Stützstäbe 61 sondern anders am Sockel abgestützt sind. Ferner ist dies auch ein Koordinatenmessgerät, welches nicht ein Paar von Führungsschienen 11, sondern nur eine einzige Führungsschiene zur Verschiebung des Tastendes in Y-Richtung aufweist. Im allgemeinen kann die in Zusammenhang mit Figur 7 beschriebene Festlegung eines Maßstabs an jeder beliebigen Stelle an einem Koordinatenmessgerät eingesetzt werden.

In dem vorangehenden Ausführungsbeispiel sind die Stützstäbe aus Invar-Stahl gebildet. Jedoch sind auch andere Materialien günstig, welche einen geringen Wärmeausdehnungskoeffizienten aufweisen. Beispiele dafür sind Zerodur und gewisse kohlefaserverstärkte Kunststoffe. Anstatt des Polymerbetons können auch andere Materialien, wie beispielsweise Granit, Mineralguss oder andere Betone eingesetzt werden, um den Sockel zu bilden.

Die in Figur 6 dargestellte Federanordnung 87 koppelt die Führungsschiene 11 an den Sockel 3 mit Federkonstanten, die in y-Richtung geringer sind als in x-Richtung. Es ist andererseits auch denkbar, die Führungsschiene 11 auch in x-Richtung mit einer niedrigeren Federkonstante an den Sockel 3 zu koppeln, wozu beispielsweise die Federanordnung dann den aufgewölbten Bereichen 103 entsprechende quer angeordnete weitere aufgewölbte Bereiche umfassen kann, um die Wangen 97 zu halten.

Außerdem kann die Viskosität des viskosen Mediums von den vorangegebenen Wertabweichungen je nach geometrischer Auslegung des Viskosedämpfers können demgemäß wesentlich größere oder kleinere Werte der Viskosität gewählt werden.

## Patentansprüche

1. Koordinatenmessgerät mit einem räumlich verfahrbaren Abtastkopf (27) zum Abtasten eines auf einer Messauflage (7) anordenbaren zu vermessenden Objekts, umfassend:
- einen Sockel (3) zum Aufstellen auf einer horizontalen Unterlage,
- ein - gesehen von oben - beidseits der Messauflage (7) und mit Abstand in Vertikalrichtung von dieser angeordnetes Paar zueinander paralleler Führungsschienen (11),
- einen quer zu den Führungsschienen (11) sich erstreckenden und an diesen in deren Längsrichtung (y) verschiebbar gelagerten Brückenträger (17), und
- dem an dem Brückenträger (17) in dessen Längsrichtung (x) und in Vertikalrichtung (z) verschiebbar gehalterten Abtastkopf (27) zum Abtasten des Objekts,
wobei sich zwischen einem Bereich (43) des Sockels (3) und den Führungsschienen (11) Stützstäbe (61) im wesentlichen vertikal erstrecken, über die die Führungsschienen (11) auf dem Sockel (3) in Vertikalrichtung (z) abgestützt sind, wobei wenigstens ein Bereich einer jeden Führungsschiene (11) an dem Sockel (3) in wenigstens einer Horizontalrichtung (x, y) elastisch in einer Ruheposition gehalten ist,
**dadurch gekennzeichnet, dass** wenigstens ein Viskosedämpfer (61, 107, 55) mit einer an den Sockel (3) gekoppelten ersten Komponente (55) und einer sich zusammen mit der Führungsschienen (11) relativ zum Sockel (3) in Horizontalrichtung (x, y) bewegenden zweiten Komponente (61) vorgesehen ist, wobei zwischen den beiden Komponenten (55, 61) ein viskoses Medium (107) zur Dämpfung von deren Relativbewegungen vorgesehen ist.

2. Koordinatenmessgerät nach Anspruch 1, wobei wenigstens einer der Stützstäbe (61) in einer zur Erstreckungsrichtung (y) der Führungsschiene (11) parallelen Ebene (67) verschwenkbar an dem Sockel (3) abgestützt ist.

3. Koordinatenmessgerät nach Anspruch 1 oder 2, wobei wenigstens einer der Stützstäbe (61) in einer zur Erstreckungsrichtung (y) der Führungsschiene (11) parallelen Ebene (85) verschwenkbar an der Führungsschiene (11) angelenkt ist.

4. Koordinatenmessgerät nach einem der Ansprüche 1 bis 3, wobei eine der beiden Komponenten des Viskosedämpfers einen Stützstab (61) umfasst.

5. Koordinatenmessgerät nach Anspruch 4, wobei ein oberer Bereich des Stützstabs (61), der Teil des Viskosedämpfers ist, an der Führungsschiene (11) in der Horizontalrichtung (y) festgelegt ist.

6. Koordinatenmessgerät nach Anspruch 4 oder 5, wobei ein unterer Bereich (59) des Stützstabs (61), der Teil des Viskosedämpfers ist, an dem Sockel (3) in Horizontalrichtung (y) festgelegt ist.

7. Koordinatenmessgerät nach einem der Ansprüche 1 bis 6, wobei der Stützstab (61) an einem unteren Bereich (43) des Sockels (3) abgestützt ist und ein oberer Bereich (41) des Sockels (3) wenigstens einen Teil des Stützstabs (61) umgreift, um diesen thermisch gegenüber einer Umgebung zu isolieren.

8. Koordinatenmessgerät nach Anspruch 7, wobei die erste Komponente des Viskosedämpfers den oberen Bereich (41) des Sockels (3) umfasst und die zweite Komponente des Viskosedämpfers den von dem oberen Bereich des Sockels (41) umgriffenen Teil des Stabes (61) umfasst.

9. Koordinatenmessgerät nach Anspruch 7 oder 8, wobei eine mit ihrer einen Seite (96) an den oberen Bereich (89) des Sockels (3) gekoppelte Federanordnung (87) vorgesehen ist, um den Bereich der Führungsschiene (11) in der wenigstens einen Horizontalrichtung (x, y) elastisch zu halten.

10. Koordinatenmessgerät nach Anspruch 9, wobei die andere Seite der Federanordnung (95) an einen oberen Bereich des Stützstabes (61) gekoppelt ist.

11. Koordinatenmessgerät nach Anspruch 9 oder 10, wobei die Federanordnung (87) den Bereich der Führungsschiene (11) in beiden Horizontalrichtungen (x, y) elastisch hält.

12. Koordinatenmessgerät nach Anspruch 11, wobei die Federanordnung (87) zur Halterung in Erstreckungsrichtung (y) der Führungsschiene (11) eine weichere Federkraft bereitstellt als quer zur Erstreckungsrichtung der Führungsschiene (11).

13. Koordinatenmessgerät nach Anspruch 9 oder 10, wobei die Federanordnung (87) den Bereich der Führungsschiene (11) in Erstreckungsrichtung (y) derselben elastisch hält und der Bereich der Führungsschiene (11) quer zur Erstreckungsrichtung (y) derselben im wesentlichen starr an den oberen Bereich des Sockels (3) gekoppelt ist.

14. Koordinatenmessgerät nach einem der Ansprüche 1 bis 13, wobei an wenigstens einer der Führungsschienen (11) ein Maßstab (21) festgelegt ist, um einen Verschiebeweg des Brückenträgers (17) entlang der Führungsschiene (11) zu bestimmen, und wobei Wärmeausdehnungskoeffizienten des Maßstabs (21) und der Führungsschiene (11) voneinander verschieden sind, und
wobei ein - gesehen in Maßstab-Längsrichtung (y) - zentraler Bereich (125) desselben an der Führungsschiene (11) in Maßstab-Längsrichtung (y) festgelegt ist und dass beidseits von dem an der Führungsschiene (11) festgelegten Bereich (125) entfernte Bereiche (121) des Maßstabs (21) gegenüber der Führungsschiene (11) in Maßstab-Längsrichtung (y) verschiebbar sind, wobei der an der Führungsschiene (11) festgelegte Bereich (125) des Maßstabs - gesehen in Längsrichtung (x) des Brückenträgers (17) - über einem Zentrum (131) der Messauflage (7) angeordnet ist.

15. Koordinatenmessgerät nach Anspruch 14, wobei die Messauflage (7) eine relativ zu dem Tastkopf (27) um eine Drehachse (131) verdrehbare Auflage (141) umfaßt und wobei der festgelegte Bereich (125) des Maßstabs - gesehen in Längsrichtung (x) des Brückenträgers (17) - mit der Drehachse (131) fluchtet.

16. Koordinatenmessgerät nach Anspruch 14 oder 15, wobei die Führungsschiene an zwei mit Abstand voneinander angeordneten Orten in Vertikalrichtung gestützt ist und wobei der an der Führungsschiene (11) festgelegte Bereich (125) des Maßstabes - gesehen in Längsrichtung (x) des Brückenträgers (17) - mittig zwischen den beiden Orten, an denen die Führungsschiene (11) abgestützt ist, angeordnet ist.

17. Koordinatenmessgerät nach einem der Ansprüche 1 bis 16, wobei an dem Brückenträger (17) ein Maßstab (31) festgelegt ist, um einen Verschiebeweg des Abtastkopfes (27) entlang dem Brückenträger (17) zu bestimmen, und wobei wärmeausdehnungskoeffizienten des Maßstabs (31) und des Brückenträgers (17) voneinander verschieden sind, und
wobei ein - gesehen in Maßstab-Längsrichtung (x) - zentraler Bereich (135) desselben an dem Brückenträger (17) in Maßstab-Längsrichtung (x) festgelegt ist und dass beidseits von dem an dem Brückenträger (17) festgelegten Bereich (135) entfernte Bereiche des Maßstabs (31) gegenüber dem Brückenträger (17) in Maßstab-Längsrichtung (x) verschiebbar sind, wobei der an dem Brückenträger (17) festgelegte Bereich (135) des Maßstabs (31) - gesehen in Längsrichtung (y) der Führungsschiene (11) - über einem Zentrum (131) der Messauflage (7) angeordnet ist.

18. Koordinatenmessgerät nach Anspruch 17, wobei die Messauflage (7) eine relativ zu dem Tastkopf (27) um eine Drehachse (131) verdrehbare Auflage (141) umfaßt und wobei der festgelegte Bereich (135) des Maßstabs - gesehen in Maßstablängsrichtung - mit der Drehachse (131) fluchtet.

19. Koordinatenmessgerät nach Anspruch 17 oder 18, wobei der an dem Brückenträger (17) festgelegte Bereich (135) des Maßstabes (31) - gesehen in Längsrichtung (y) der Führungsschiene (11) - mittig zwischen den beiden Führungsschienen (11) angeordnet ist.

20. Koordinatenmessgerät nach einem der Ansprüche 14 bis 19, wobei der Maßstab (21, 31) in dem festgelegten Bereich (125, 135) in seiner Querrichtung bezüglich der Führungsschiene (11) bzw. dem Brückenträger (17) verlagerbar ist.

21. Koordinatenmessgerät nach Anspruch 20, wobei ein Rollenlager (121, 123, 127) vorgesehen ist, um den Maßstab (21, 31) in in seiner Querrichtung verlagerbar und in seiner Längsrichtung festgelegt an der Führungsschiene (11) bzw. dem Brückenträger (17) zu haltern.

22. Koordinatenmessgerät nach Anspruch 20 oder 21, wobei der Maßstab (21, 31) in seinen von dem an der Führungsschiene (11) bzw. dem Brückenträger (17) festgelegten Bereich (125, 135) entfernten Bereichen quer zur Maßstab-Längsrichtung bezüglich der Führungsschiene (11) bzw. dem Brückenträger (17) festgelegt ist.

23. Koordinatenmessgerät nach Anspruch 22, wobei ein Rollenlager (113, 117, 119) vorgesehen ist, um den Maßstab (21, 31) in in seiner Maßstab-Längsrichtung verlagerbar und in seiner Querrichtung festgelegt an der Führungsschiene (11) bzw. dem Brückenträger (17) zu haltern.

24. Koordinatenmessgerät nach Anspruch 21 oder 23, wobei das Rollenlager zwei sich gegenüberliegende Rollflächen (115) aufweist, von denen eine an dem Maßstab (21, 31) festgelegt ist und die andere an der Führungsschiene (11) bzw. dem Brückenträger (17) festgelegt ist und zwischen denen wenigstens eine Kugel (117) angeordnet ist.

25. Koordinatenmessgerät nach Anspruch 24, wobei die beiden Rollflächen (115) magnetisch gegen die Kugel (117) gedrückt sind.

## Claims

1. A coordinate measuring device including a spatially displaceable scanning head (27) for scanning an object to be measured, said object being positionable on a measuring support (7), said coordinate measuring device comprising:
- a base (3) for mounting on a horizontal rest,
- a pair of guide rails (11) extending parallel to one another, one rail being positioned - viewed from above - on each side of the measuring support (7) spaced apart from the same in vertical direction,
- a bridge girder (17) extending transversely to the guide rails (11) and being displaceably mounted on the latter in the longitudinal direction (y) thereof, and
- the scanning head (27) for scanning the object, said scanning head (27) being displaceably mounted on the bridge girder (17) in the longitudinal direction (x) thereof and in vertical direction (z),
wherein supporting rods (61) extend substantially vertically between a portion (43) of the base (3) and the guide rails (11) for supporting the guide rails (11) on the base (3) in vertical direction (z), at least one portion of each guide rail (11) being held resiliently on the base (3) in at least one horizontal direction (x, y) in an idle position,
**characterized in that** at least one viscous damper (61, 107, 55) is provided, comprising a first component (55) coupled to the base (3) and a second component (61) moving together with the guide rails (11) relative to the base (3) in horizontal direction (x,y), a viscous medium (107) being provided between the two components (55, 61) for damping the relative movements of said two components.

2. The coordinate measuring device according to claim 1, wherein at least one of the supporting rods (61) is pivotably supported on the base (3) in a plane (67) extending parallel to the direction (y) into which the guide rail (11) extends.

3. The coordinate measuring device according to claim 1 or 2, wherein at least one of the supporting rods (61) is pivotably coupled to the guide rail (11) in a plane (85) extending parallel to the direction (y) into which the guide rail (11) extends.

4. The coordinate measuring device according to one of claims 1 to 3, wherein one of the two components of the viscous damper comprises a supporting rod (61).

5. The coordinate measuring device according to claim 4, wherein an upper portion of the supporting rod (61) forming part of the viscous damper is fixed in position on the guide rail (11) in the horizontal direction (y).

6. The coordinate measuring device according to claim 4 or 5, wherein a lower portion (59) of the supporting rod (61) forming part of the viscous damper is fixed in position on the base (3) in horizontal direction (y).

7. The coordinate measuring device according to claims 1 to 6, wherein the supporting rod (61) is supported at a lower portion (43) of the base (3), and an upper portion (41) of the base (3) engages at least around a part of the supporting rod (61) to thermally insulate the same against an environment.

8. The coordinate measuring device according to claim 7, wherein the first component of the viscous damper encompasses the upper portion (41) of the base (3) and the second component of the viscous damper encompasses the part of the rod (61) around which the upper portion (41) of the base engages.

9. The coordinate measuring device according to claim 7 or 8, wherein a spring arrangement (87) is provided which is coupled with its one side (96) to the upper portion (89) of the base (3) to resiliently hold the portion of the guide rail (11) in the at least one horizontal direction (x, y).

10. The coordinate measuring device according to claim 9, wherein the other side of the spring arrangement (95) is coupled to an upper portion of the supporting rod (61).

11. The coordinate measuring device according to claim 9 or 10, wherein the spring arrangement (87) resiliently holds the portion of the guide rail (11) in both horizontal directions (x, y).

12. The coordinate measuring device according to claim 11, wherein the spring arrangement (87) provides a lesser spring force for holding in the direction of extension (y) of the guide rail (11) than transversely to the direction of extension (y) of the guide rail (11).

13. The coordinate measuring device according to claim 9 or 10, wherein the spring arrangement (87) resiliently holds the portion of the guide rail (11) in the direction of extension (y) of the latter, and the portion of the guide rail (11) extending transversely to the direction of extension (y) of the latter is coupled substantially rigidly to the upper portion of the base (3).

14. The coordinate measuring device according to one of claims 1 to 13, wherein a scale (21) is fixed in position on at least one of the guide rails (11) to determine a shift path of the bridge girder (17) along the guide rail (11), and wherein thermal expansion coefficients of the scale (21) and the guide rail (11) are different from one another, and
wherein - viewed in the the scale's longitudinal direction (y) - a central portion (125) of the scale is fixed in position on the guide rail (11) in the scale's longitudinal direction (y), and portions (121) of the scale provided on both sides of and distant from the portion (125) fixed in position on the guide rail (11) are displaceable relative to the guide rail (11) in the the scale's longitudinal direction (y), the scale portion (125) which is fixed in position on the guide rail (11) being disposed - viewed in longitudinal direction (x) of the bridge girder (17) - above a center (131) of the measuring support (7).

15. The coordinate measuring device according to claim 14, wherein the measuring support (7) comprises a support (141) which is rotatable about an axis of rotation (131) relative to the scanning head (27) and wherein the portion (125) which is fixed in position on the scale is in alignment - viewed in longitudinal direction (x) of the bridge girder (17) - with the axis of rotation (131).

16. The coordinate measuring device according to claim 14 or 15, wherein the guide rail is supported in vertical direction at two locations spaced apart from one another and wherein the scale's portion (125) which is fixed in position on the guide rail (11) is disposed - viewed in longitudinal direction (x) of the bridge girder (17) - centrally between the two locations at which the guide rail (11) is supported.

17. The coordinate measuring device according to one of claims 1 to 16, wherein a scale (31) is fixed in position on the bridge girder (17) to determine a shift path of the scanning head (27) along the bridge girder (17) and wherein thermal expansion coefficients of the scale (31) and the bridge girder (17) are different from each other, and
wherein - viewed in the the scale's longitudinal direction (x) - a central portion (135) of the scale is fixed in position on the bridge girder (17) in the the scale's longitudinal direction (x), and portions of the scale (31) provided on both sides of and distant from the scale's (31) portion (135) fixed in position on the bridge girder (17) are displaceable relative to the bridge girder (17) in the scale's longitudinal direction (x), the scale portion (135) of the scale (31) which is fixed in position on the bridge girder (17) being disposed - viewed in longitudinal direction (y) of the guide rail (11) - above a center (131) of the measuring support (7).

18. The coordinate measuring device according to claim 17, wherein the measuring support (7) comprises a support (141) which is rotatable about an axis of rotation (131) relative to the scanning head (27) and wherein the portion (135) which is fixed in position on the scale is in alignment - viewed in the scale's longitudinal direction - with the axis of rotation (131).

19. The coordinate measuring device according to claim 17 or 18, wherein the scale portion (135) of the scale (31) fixed in position on the bridge girder (17) is disposed - viewed in longitudinal direction (y) of the guide rail (11) - centrally between the two guide rails (11).

20. The coordinate measuring device according to one of claims 14 to 19, wherein the scale (21, 31) is shiftable in its fixed portion (125, 135) in its transverse direction relative to the guide rail (11) or the bridge girder (17), respectively.

21. The coordinate measuring device according to claim 20, wherein a roller bearing (121, 123, 127) is provided for holding the scale (21, 31) to be displaceable along its transverse direction and fixed in position on the guide rail (11) or bridge girder (17), respectively, in its longitudinal direction.

22. The coordinate measuring device according to claim 20 or 21, wherein the scale (21, 31) is fixed in position transverse to the the scale's longitudinal direction relative to the guide rail (11) and bridge girder (17), respectively, in its portions distant from the portion (125, 135) fixed in position on the guide rail (11) or bridge girder (17), respectively.

23. The coordinate measuring device according to claim 22, wherein a roller bearing (113, 117, 119) is provided for holding the scale (21, 31) displaceable in its longitudinal direction and fixed in position on the guide rail (11) or the bridge girder (17), respectively, in its transverse direction.

24. The coordinate measuring device according to claim 21 or 23, wherein the roller bearing includes two opposite roller surfaces (115), one of which is fixed to the scale (21, 31) and the other one is fixed to the guide rail (11) and the bridge girder (17), respectively, at least one ball (117) being disposed between the two surfaces.

25. The coordinate measuring device according to claim 24, wherein the two roller surfaces (115) are magnetically urged against the ball (117).

## Revendications

1. Appareil de mesure de coordonnées, comprenant une tête de palpage (27) susceptible d'être déplacée dans l'espace pour palper un objet à mesurer susceptible d'être agencé sur un support de mesure (7), comprenant :
-- un socle (3) pour poser un support horizontal,
-- une paire de rails de guidage (11) parallèles l'un à l'autre et agencés, vus de dessus, des deux côtés du support de mesure (7) et à distance de celui-ci en direction verticale,
-- un support en forme de pont (17) s'étendant transversalement par rapport aux rails de guidage (11) et monté en translation sur ceux-ci dans leur direction longitudinale (y), et
-- ladite tête de palpage (27) montée sur le support en forme de pont (17) avec faculté de translation dans sa direction longitudinale (x) et en direction verticale (z), pour palper l'objet,
dans lequel des barres de soutien (61) s'étendent sensiblement verticalement entre une région (43) du socle (3) et les rails de guidage (11), au moyen desquelles les rails de guidage (11) sont soutenus sur le socle (3) en direction verticale (z), et au moins une zone de chaque rail de guidage (11) et tenue sur le socle (3) dans au moins une direction horizontale (x, y) de manière élastique dans une position de repos,
**caractérisé en ce qu'**il est prévu au moins un amortisseur à effet visqueux (61, 107, 55) avec un premier composant (55) couplé au socle (3) et un second composant (61) qui se déplace relativement au socle (3) en direction horizontale (x, y) conjointement avec les rails de guidage (11), un milieu visqueux étant prévu entre les deux composants (55,61) pour amortir leurs mouvements relatifs.

2. Appareil de mesure de coordonnées selon la revendication 1, dans lequel l'une au moins des barres de soutien (61) est soutenue sur le socle (3) avec faculté de pivotement dans un plan (67) parallèle à la direction d'extension (y) des rails de guidage (11).

3. Appareil de mesure de coordonnées selon la revendication 1 ou 2, dans lequel l'une au moins des barres de soutien (61) est articulée sur le rail de guidage (11) avec faculté de pivotement dans un plan (85) parallèle à la direction d'extension (y) des rails de guidage (11).

4. Appareil de mesure de coordonnées selon l'une des revendications 1 à 3, dans lequel l'un des deux composants de l'amortisseur à effet visqueux comprend une barre de soutien (61).

5. Appareil de mesure de coordonnées selon la revendication 4, dans lequel une région supérieure de la barre de soutien (61), qui fait partie de l'amortisseur à effet visqueux, est immobilisée sur le rail de guidage (11) en direction horizontale (y).

6. Appareil de mesure de coordonnées selon la revendication 4 ou 5, dans lequel une région inférieure (59) de la barre de soutien (61), qui fait partie de l'amortisseur à effet visqueux, est immobilisée sur le socle (3) en direction horizontale (y).

7. Appareil de mesure de coordonnées selon l'une des revendications 1 à 6, dans lequel la barre de soutien (61) est soutenue sur une région inférieure (43) du socle (3), et une région supérieure (41) du socle (3) entoure au moins une partie de la barre de soutien (61) afin d'isoler celle-ci thermiquement vis-à-vis d'un environnement.

8. Appareil de mesure de coordonnées selon la revendication 7, dans lequel le premier composant de l'amortisseur à effet visqueux comprend la région supérieure (41) du socle (3), et le second composant de l'amortisseur à effet visqueux comprend la partie de la barre (61) entourée par la région supérieure du socle (41).

9. Appareil de mesure de coordonnées selon la revendication 7 ou 8, dans lequel est prévu un agencement à ressort (87) couplé par l'un de ses côtés (96) à la région supérieure (89) du socle (3) pour maintenir élastiquement la région des rails de guidage (11) dans l'une au moins des directions horizontales (x, y).

10. Appareil de mesure de coordonnées selon la revendication 9, dans lequel l'autre côté de l'agencement à ressort (95) est couplé à une région supérieure de la barre de soutien (61).

11. Appareil de mesure de coordonnées selon la revendication 9 ou 10, dans lequel l'agencement à ressort (87) maintient élastiquement la région des rails de guidage (11) dans les deux directions horizontales (x, y).

12. Appareil de mesure de coordonnées selon la revendication 11, dans lequel l'agencement à ressort (87) applique, pour le maintien dans la direction d'extension (y) des rails de guidage (11), une force élastique plus faible que transversalement à la direction d'extension des rails de guidage (11).

13. Appareil de mesure de coordonnées selon la revendication 9 ou 10, dans lequel l'agencement à ressort (87) retient la région des rails de guidage (11) de manière élastique dans la direction d'extension (y) de ceux-ci, et dans lequel la région des rails de guidage (11) est couplée de manière sensiblement rigide, transversalement à la direction d'extension (y) de ceux-ci, à la région supérieure du socle (3).

14. Appareil de mesure de coordonnées selon l'une des revendications 1 à 13, dans lequel une règle de mesure (21) est immobilisée sur l'un au moins des rails de guidage (11) afin de définir un trajet de déplacement du support en forme de pont (17) le long du rail de guidage (11), et dans lequel les coefficients de dilatation thermique de la règle de mesure (21) et du rail de guidage (11) sont différents l'un de l'autre, et
dans lequel une région centrale (125) de la règle de mesure, vue dans la direction longitudinale (y) de celle-ci, est immobilisé sur le rail de guidage (11) dans la direction longitudinale (y) de la règle de mesure, et sur les deux côtés de la région (125) immobilisée sur le rail de guidage (11), des régions éloignées (121) de la règle de mesure (21) sont susceptibles de se déplacer par rapport au rail de guidage (11) dans la direction longitudinale (y) de la règle de mesure, la région (125) de la règle de mesure immobilisée sur le rail de guidage (11) étant agencée, vue en direction longitudinale (x) du support en forme de pont (17), au-dessus d'un centre (131) du support de mesure (7).

15. Appareil de mesure de coordonnées selon la revendication 14, dans lequel le support de mesure (7) comprend un support (141) capable de rotation par rapport à la tête de palpage (27) autour d'un axe de rotation (131), et la région immobilisée (125) de la règle de mesure, vue en direction longitudinale (x) du support en forme de pont (17), est alignée avec l'axe de rotation (131).

16. Appareil de mesure de coordonnées selon la revendication 14 ou 15, dans lequel le rail de guidage est soutenu en direction verticale à deux emplacements agencés à distance l'un de l'autre, et la région (125) de la règle de mesure immobilisée sur le rail de guidage (11), vue en direction longitudinale (x) du support en forme de pont (17), est agencée au milieu entre les deux emplacements auxquels le rail de guidage (11) est soutenu.

17. Appareil de mesure de coordonnées selon l'une des revendications 1 à 16, dans lequel une règle de mesure (31) est immobilisée sur le support en forme de pont (17) afin de définir un trajet de déplacement de la tête de palpage (27) le long du support en forme de pont (17), et les coefficients de dilatation thermique de la règle de mesure (31) et du support en forme de pont (17) sont différents l'un de l'autre, et
dans lequel une région centrale (135) de la règle de mesure, vue en direction longitudinale (x) de celle-ci, est immobilisée sur le support en forme de pont (17) dans la direction longitudinale (x) de la règle de mesure, et, des deux côtés de la région (135) immobilisée sur le support en forme de pont (17), des régions éloignées de la règle de mesure (31) sont susceptibles de se déplacer par rapport au support en forme de pont (17) dans la direction longitudinale (x) de la règle de mesure, la région (135) de la règle de mesure (31) immobilisée sur le support en forme de pont (17), vue en direction longitudinale (y) du rail de guidage (11), étant agencée au-dessus d'un centre (131) du support de mesure (7).

18. Appareil de mesure de coordonnées selon la revendication 17, dans lequel le support de mesure (7) comprend un support (141) capable de rotation par rapport à la tête de palpage (27) autour d'un axe de rotation (131), et la région immobilisée (135) de la règle de mesure, vue dans la direction longitudinale de la règle de mesure, est alignée avec l'axe de rotation (131).

19. Appareil de mesure de coordonnées selon la revendication 17 ou 18, dans lequel la région (135) de la règle de mesure (31) immobilisée sur le support en forme de pont (17), vue en direction longitudinale (y) des rails de guidage (11), est agencée au milieu entre les deux rails de guidage (11).

20. Appareil de mesure de coordonnées selon l'une des revendications 14 à 19, dans lequel la règle de mesure (21, 31), dans la région immobilisée (125, 135), est déplaçable dans sa direction transversale par rapport au rail de guidage (11) ou respectivement par rapport au support en forme de pont (17).

21. Appareil de mesure de coordonnées selon la revendication 20, dans lequel il est prévu un palier à rouleaux (121, 123, 127) afin de tenir la règle de mesure (21, 31) sur le rail de guidage (11) ou respectivement sur le support en forme de pont (17) de façon déplaçable dans sa direction transversale et immobilisée dans sa direction longitudinale.

22. Appareil de mesure de coordonnées selon la revendication 20 ou 21, dans lequel la règle de mesure (21, 31), dans ses régions éloignées de la région (125, 135) immobilisée sur le rail de guidage (11) ou sur le support en forme de pont (17), est immobilisée transversalement à la direction longitudinale de la règle de mesure par rapport au rail de guidage (11) ou au support en forme de pont (17).

23. Appareil de mesure de coordonnées selon la revendication 22, dans lequel il est prévu un palier à rouleaux (113, 117, 119) afin de tenir la règle de mesure (21, 31) sur le rail de guidage (11) ou respectivement sur le support en forme de pont (17) de façon déplaçable dans sa direction longitudinale et immobilisée dans sa direction transversale.

24. Appareil de mesure de coordonnées selon la revendication 21 ou 23, dans lequel le palier à rouleaux comprend deux surfaces de roulement (115) mutuellement opposées, dont l'une est établie sur la règle de mesure (21, 31) et dont l'autre est établie sur le rail de guidage (11) ou sur le support en forme de pont (17), et entre lesquelles est agencée au moins une bille (117).

25. Appareil de mesure de coordonnées selon la revendication 24, dans lequel les deux surfaces de roulement (115) sont poussées par voie magnétique contre la bille (117).
